# EUROPEAN PATENT APPLICATION

(11) **EP 4 366 037 A1**
(43) Date of publication of application: **08.05.2024**
(21) Application number: 22833158.3
(22) Date of filing: 28.06.2022
(51) Int. Cl.: H01M 10/6555, B65D 85/88, H01G 11/18, H01G 11/78, H01M 10/613, H01M 10/647, H01M 10/653, H01M 50/126, H01M 50/131

(54) **POWER STORAGE DEVICE, HEAT TRANSFER BODY, AND PACKAGE**

(30) Priority: 29.06.2021 JP 2021108193
(71) Applicant: DAI NIPPON PRINTING CO., LTD., Tokyo 162-8001 (JP)
(72) Inventor: SASAKI, Miho, Tokyo 162-8001 (JP); SUZUKI, Hiroyuki, Tokyo 162-8001 (JP)
(74) Representative: Müller-Boré & Partner Patentanwälte PartG mbB
(86) International application number: PCT/JP2022/025753
(87) International publication number: WO 2023/277011

(57) **Abstract**

This power storage device comprises: an electrode body; an exterior body including an exterior film sealing the electrode body; and a heat transfer body attached to at least a portion of the surface of the exterior body. The exterior film includes at least a base material layer, an exterior barrier layer, and a heat-fusible resin layer. The exterior barrier layer is constituted of a material containing a metal, the heat transfer body includes a heat transfer layer constituted of a material containing a metal, and the thickness of the heat transfer layer is equal to or greater than the thickness of the exterior barrier layer.

## Description

### TECHNICAL FIELD

The present invention relates to an electrical storage device, a heat transfer material, and a packaging.

### BACKGROUND ART

Patent Document 1 discloses an example of an electrical storage device. In this electrical storage device, an electrode assembly is sealed in a bag formed of a laminate film. The laminate film includes a water vapor-impermeable layer formed of a material containing a metal such as aluminum. Therefore, ingress of water vapor and the like into the bag is suppressed.

### PRIOR ART DOCUMENT

### PATENT DOCUMENT

Patent Document 1: Japanese Patent No. 4509242

### SUMMARY OF THE INVENTION

### PROBLEMS TO BE SOLVED BY THE INVENTION

If an electrode assembly generates heat in the electrical storage device, a part of the heat is transferred to a metal forming the water vapor-impermeable layer and released to the outside. Therefore, an excessive rise in temperature of the electrode assembly is suppressed. The thickness of the water vapor-impermeable layer may be further increased for more suitably suppressing a rise in temperature of the electrode assembly. However, since the water vapor-impermeable layer is formed of a material containing a metal, the productivity of the laminate film may be deteriorated if the thickness of the water vapor-impermeable layer is increased.

An object of the present invention is to provide an electrical storage device, a heat transfer material and a packaging which enable more suitably suppressing an excessive rise in temperature of an electrode assembly.

### MEANS FOR SOLVING THE PROBLEM

An electrical storage device according to a first aspect of the present invention includes: an electrode assembly; an outer packaging including an exterior film that seals the electrode assembly; and a heat transfer material attached to at least a part of a surface of the outer packaging, in which the exterior film includes at least a base material layer, an exterior barrier layer, and a heat-sealable resin layer, the exterior barrier layer is formed of a material containing a metal, the heat transfer material includes a heat transfer layer formed of a material containing a metal, and a thickness of the heat transfer layer is equal to or larger than a thickness of the exterior barrier layer.

An electrical storage device according to a second aspect of the present invention is the electrical storage device according to the first aspect, in which the outer packaging includes a first surface, and a second surface having an area larger than that of the first surface, and the heat transfer material is attached to at least the second surface.

An electrical storage device according to a third aspect of the present invention is the electrical storage device according to the first or second aspect, in which the heat transfer material is formed in a cover shape.

An electrical storage device according to a fourth aspect of the present invention is the electrical storage device according to any one of the first to third aspects, in which the outer packaging includes a cooling surface cooled by a cooling mechanism, and the heat transfer material is attached to at least a part of a portion of a surface of the outer packaging other than the cooling surface so as to expose the cooling surface.

An electrical storage device according to a fifth aspect of the present invention is the electrical storage device according to any one of the first to fourth aspects, in which a thickness of the exterior barrier layer is 100 µm or less.

An electrical storage device according to a sixth aspect of the present invention is the electrical storage device according to any one of the first to fifth aspects, in which the heat transfer material includes a base material layer laminated on the heat transfer layer.

An electrical storage device according to a seventh aspect of the present invention includes: an electrode assembly; an outer packaging including an exterior film that seals the electrode assembly; and a heat transfer material attached to the outer packaging so as to expose at least a part of a surface of the outer packaging, in which the exterior film includes at least a base material layer, an exterior barrier layer, and a heat-sealable resin layer, the exterior barrier layer is formed of a material containing a metal, and the heat transfer material includes a heat transfer layer formed of a material containing a metal.

A heat transfer material according to an eighth aspect of the present invention is a heat transfer material attached to a surface of an outer packaging of an electrical storage device including an electrode assembly, and the outer packaging including an exterior film that seals the electrode assembly, in which the heat transfer material includes a heat transfer layer formed of a material containing a metal.

A heat transfer material according to a ninth aspect of the present invention is the heat transfer material according to the eighth aspect, in which the exterior film includes an exterior barrier layer formed of a material containing a metal, and a thickness of the heat transfer layer is equal to or larger than a thickness of the exterior barrier layer.

A heat transfer material according to a tenth aspect of the present invention is the heat transfer material according to the ninth aspect, in which the outer packaging includes a first surface, and a second surface having an area larger than that of the first surface, and is attached to at least the second surface.

A heat transfer material according to an eleventh aspect of the present invention is the heat transfer material according to any one of the eighth to tenth aspects, in which the heat transfer material is formed in a cover shape.

A heat transfer material according to a twelfth aspect of the present invention is the heat transfer material according to any one of the eighth to eleventh aspects, in which the outer packaging includes a cooling surface cooled by a cooling mechanism, and the heat transfer material is attached to at least a part of a portion of a surface of the outer packaging other than the cooling surface so as to expose the cooling surface.

A heat transfer material according to a thirteenth aspect of the present invention is the heat transfer material according to any one of the tenth to twelfth aspects citing the ninth aspect, in which a thickness of the exterior barrier layer is 100 µm or less.

A heat transfer material according to a fourteenth aspect of the present invention is the heat transfer material according to any one of the eighth to thirteenth aspects, in which the heat transfer material includes a base material layer laminated on the heat transfer layer.

A packaging according to a fifteenth aspect of the present invention includes: an exterior film for sealing an electrode assembly; and a heat transfer material attached to at least a part of a surface of the outer packaging, in which the exterior film includes at least a base material layer, an exterior barrier layer, and a heat-sealable resin layer, the exterior barrier layer is formed of a material containing a metal, the heat transfer material includes a heat transfer layer formed of a material containing a metal, and a thickness of the heat transfer layer is equal to or larger than a thickness of the exterior barrier layer.

A packaging according to a sixteenth aspect of the present invention includes: an exterior film for sealing the electrode assembly; and a heat transfer material attached to the outer packaging so as to expose at least a part of a surface of the outer packaging, in which the exterior film includes at least a base material layer, an exterior barrier layer, and a heat-sealable resin layer, the exterior barrier layer is formed of a material containing a metal, and the heat transfer material includes a heat transfer layer formed of a material containing a metal.

### ADVANTAGES OF THE INVENTION

An electrical storage device, a heat transfer material and a packaging according to the present invention enable more suitably suppressing an excessive rise in temperature of an electrode assembly.

### BRIEF DESCRIPTION OF THE DRAWINGS

Fig. 1 is a front view of an electrical storage device according to an embodiment, and a cooling mechanism.
Fig. 2 is a sectional view showing a layer configuration of an exterior film of the electrical storage device of Fig. 1.
Fig. 3 is an exploded perspective view of the electrical storage device of Fig. 1.
Fig. 4 is a sectional view showing a layer configuration of a heat transfer material of the electrical storage device of Fig. 1.
Fig. 5 is a sectional view showing a configuration of the cooling mechanism of Fig. 1.
Fig. 6 is a plan view showing an example of a packaging.
Fig. 7 is a table showing specifications of electrical storage devices of Examples, and test results.

### EMBODIMENTS OF THE INVENTION

Hereinafter, an electrical storage device according to an embodiment of the present invention will be described with reference to the drawings. In the present specification, a numerical range indicated by the term "A to B" means "A or more" and "B or less". For example, the expression of "2 to 15 mm" means 2 mm or more and 15 mm or less.

### <1. Overall configuration of electrical storage device>

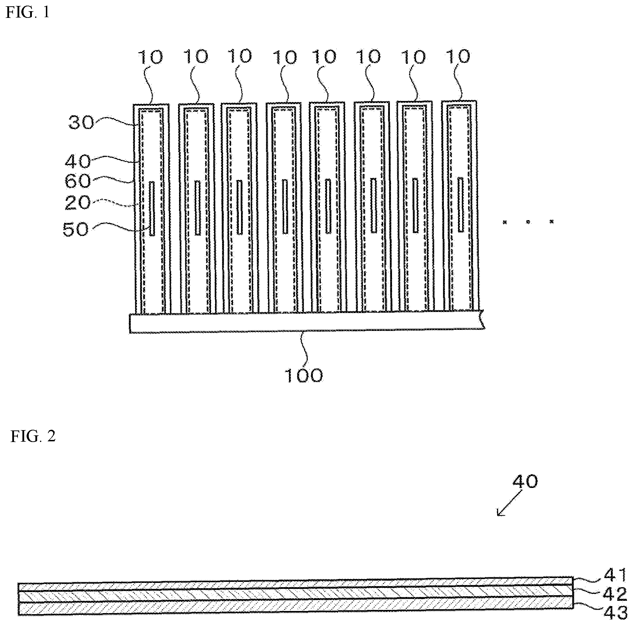

Fig. 1 is a front view of an electrical storage device 10 according to the present embodiment, and a cooling mechanism 100 that cools the electrical storage device 10. For example, a plurality of electrical storage devices 10 are used by being arranged on the cooling mechanism 100. A plurality of electrical storage devices 10 are arranged with predetermined spaces provided between the adjacent electrical storage devices 10. The electrical storage device 10 includes an electrode assembly 20, an outer packaging 30, an electrode terminal 50, and a heat transfer material 60.

The electrode assembly 20 includes electrodes (a positive electrode and a negative electrode), a separator and the like which constitute an electrical storage member such as a lithium ion battery, a capacitor or an all-solid-state battery. The electrode assembly 20 has a substantially rectangular parallelepiped shape. The term "substantially rectangular parallelepiped" means not only a perfect rectangular parallelepiped, but also a three-dimensional shape which can be regarded as a rectangular parallelepiped if the shape of a part of an outer surface is modified.

The electrode terminal 50 is a metal terminal used for input/output of electric power in the electrode assembly 20. One end part of the electrode terminal 50 is electrically connected to an electrode (positive electrode or negative electrode) in the electrode assembly 20, and the other end part protrudes outward from an end edge of the outer packaging 30.

The metal material forming the electrode terminal 50 is, for example, aluminum, nickel or copper. For example, when the electrode assembly 20 is a lithium ion battery, the electrode terminal 50 connected to the positive electrode is typically formed of aluminum or the like, and the electrode terminal 50 connected to the negative electrode is typically formed of copper, nickel or the like.

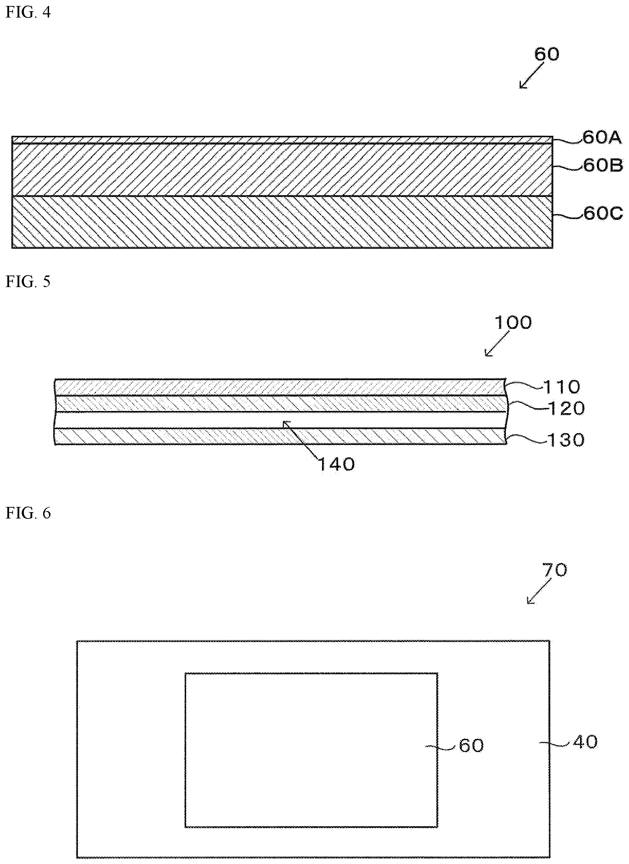

The outer packaging 30 includes an exterior film 40 (Fig. 4 etc.), and seals the electrode assembly 20. The method for sealing the electrode assembly 20 with the exterior film 40 can be arbitrarily selected. For example, a housing portion (recess) for housing the electrode assembly 20 may be formed in at least one of the two exterior films 40 through cold molding, the electrode assembly 20 is housed in the recess, and heat-sealing is performed along the outer peripheral portion of the exterior film 40 in plan view to seal the electrode assembly 20. In another example, the electrode assembly 20 is sealed by winding the exterior film 40 around the electrode assembly 20 to seal an opening portion. According to the other example, the electrode assembly 20 can be easily sealed regardless of the thickness of the electrode assembly 20. For reducing a dead space between the electrode assembly 20 and the exterior film 40 in order to improve the volume energy density of the electrical storage device 10, it is preferable that the exterior film 40 is in direct or indirect contact with the electrode assembly 20. In an all-solid-state battery, it is necessary to eliminate a space between the electrode assembly 20 and the exterior film 40 from the viewpoint that even application of high pressure from the outer surface of the battery is required for exhibiting battery performance, and therefore it is preferable that the exterior film 40 is in direct or indirect contact with the electrode assembly 20. The state in which the exterior film 40 is in direct or indirect contact with the electrode assembly 20 includes, for example, a state in which the exterior film 40 and a separator, a current collecting foil, an electrode material, an insulating material or the like forming electrode assembly 20 are in contact with each other.

### <2. Configuration of exterior film>

Fig. 2 is a sectional view showing an example of a layer configuration of the exterior film 40. The exterior film 40 is, for example, a laminate (laminate film) including a base material layer 41, an exterior barrier layer 42 and a heat-sealable resin layer 43 in the stated order. The exterior film 40 is only required to include at least the exterior barrier layer 42. The exterior film 40 is preferably heat-sealable.

The base material layer 41 is a layer for imparting heat resistance to the exterior film 40 and suppressing generation of pinholes which may occur during processing or distribution. The base material layer 41 includes, for example, at least one of an oriented polyester resin layer and an oriented polyamide resin layer. For example, when the base material layer 41 includes at least one of an oriented polyester resin layer and an oriented polyamide resin layer, breakage of the exterior film 40 can be suppressed by protecting the exterior barrier layer 42 during processing of the exterior film 40. From the viewpoint of increasing the tensile elongation of the exterior film 40, the oriented polyester resin layer is preferably a biaxially oriented polyester resin layer, and the oriented polyamide resin layer is preferably a biaxially oriented polyamide resin layer. Further, from the viewpoint of excellent piercing strength or shock strength, the oriented polyester resin layer is more preferably a biaxially oriented polyethylene terephthalate (PET) film, and the oriented polyamide resin layer is more preferably a biaxially oriented nylon (ONy) film. The base material layer 41 may include both an oriented polyester resin layer and an oriented polyamide resin layer. From the viewpoint of film strength, the thickness of the base material layer 41 is, for example, preferably 5 to 300 µm, more preferably 20 to 150 µm.

The exterior barrier layer 42 is formed of a material containing a metal. Examples of the metal include aluminum alloys, stainless steel, titanium steel, and steel plates. In the present embodiment, it is preferable that the exterior barrier layer 42 is formed of a material containing an aluminum alloy or stainless steel. The aluminum alloy is excellent in moisture barrier property, processability such as extensibility and economic efficiency. It is preferable that the material forming the exterior barrier layer 42 contains iron from the viewpoint of packaging suitability and pinhole resistance in packaging of the electrode assembly 20. The content of iron in the material forming the exterior barrier layer 42 is preferably 0.5 to 5.0 mass%, more preferably 0.7 to 2.0 mass%. When the content of iron is 0.5 mass% or more, the exterior film 40 has packaging suitability, excellent pinhole resistance, and extensibility of exterior film 40. When the content of iron is 5.0 mass% or less, the exterior film 40 has excellent flexibility.

From the viewpoint of the barrier property, pinhole resistance and packaging suitability, the thickness of the exterior barrier layer 42 is preferably 15 µm or more, more preferably 30 µm or more. The thickness of the exterior barrier layer 42 is preferably 100 µm or less, more preferably 90 µm or less, more preferably 85 µm or less, still more preferably 80 µm or less. The thickness of the exterior barrier layer 42 is preferably in the range of, for example, 15 µm to 100 µm, 15 µm to 90 µm, 15 µm to 85 µm, 15 µm to 80 µm, 30 µm to 100 µm, 30 µm to 90 µm, 30 µm to 85 µm, or 30 µm to 80 µm. When the thickness of the exterior barrier layer 42 is 15 µm or more, the exterior film 40 is unlikely to be broken even if stress is applied by packaging processing. When the thickness of the exterior barrier layer 42 is 100 µm or less, an increase in mass of the exterior film 40 can be reduced, so that it is possible to suppress a decrease in weight energy density of the electrical storage device 10.

Since the exterior barrier layer 42 is formed of a material containing a metal, it is preferable that the exterior film 40 includes a corrosion-resistant film on at least a surface on a side opposite to the base material layer 41 for preventing dissolution and corrosion. The exterior barrier layer 42 may include a corrosion-resistant film on each of both surfaces thereof. Here, the corrosion-resistant film refers to a thin film obtained by subjecting the surface of the exterior barrier layer 42 to, for example, hydrothermal denaturation treatment such as boehmite treatment, chemical conversion treatment, anodization treatment, plating treatment with nickel, chromium or the like, or corrosion prevention treatment by application of a coating agent to impart corrosion resistance (e.g. acid resistance and alkali resistance) to the exterior barrier layer 42. Specifically, the corrosion-resistant film means a film which improves the acid resistance of the exterior barrier layer 42 (acid-resistant film), a film which improves the alkali resistance of the exterior barrier layer 42 (alkali-resistant film), or the like. One of treatments for forming the corrosion-resistant film may be performed, or two or more thereof may be performed in combination. In addition, not only one layer but also multiple layers can be formed. Further, of these treatments, the hydrothermal denaturation treatment and the anodization treatment are treatments in which the surface of the metal foil is dissolved with a treatment agent to form a metal compound excellent in corrosion resistance. The definition of the chemical conversion treatment may include these treatments. When the exterior barrier layer 42 is provided with the corrosion-resistant film, the exterior barrier layer 42 is regarded as including the corrosion-resistant film.

The corrosion-resistant film exhibits the effects of preventing delamination between the exterior barrier layer 42 and the base material layer 41 during molding of the exterior film 40; preventing dissolution and corrosion of the surface of the exterior barrier layer 42, and dissolution and corrosion of aluminum oxide present on the surface of the exterior barrier layer 42 by hydrogen fluoride generated by reaction of an electrolyte with moisture; and improving the bondability (wettability) of the surface of the exterior barrier layer 42 to prevent delamination between the base material layer 41 and the exterior barrier layer 42 during heat-sealing and delamination between the base material layer 41 and the exterior barrier layer 42 during molding.

The heat-sealable resin layer 43 is a layer that imparts a sealing property in heat-sealing to the exterior film 40. Examples of the heat-sealable resin layer 43 include resin films formed of a polyolefin-based resin, or an acid-modified polyolefin-based resin obtained by graft-modification of a polyolefin-based resin with an acid such as maleic anhydride. The heat-sealable resin layer 43 may be polybutylene terephthalate. From the viewpoint of the sealing property and strength, the thickness of the heat-sealable resin layer 43 is, for example, preferably 20 to 300 µm, more preferably 40 to 150 µm.

### <3. Configuration of outer packaging>

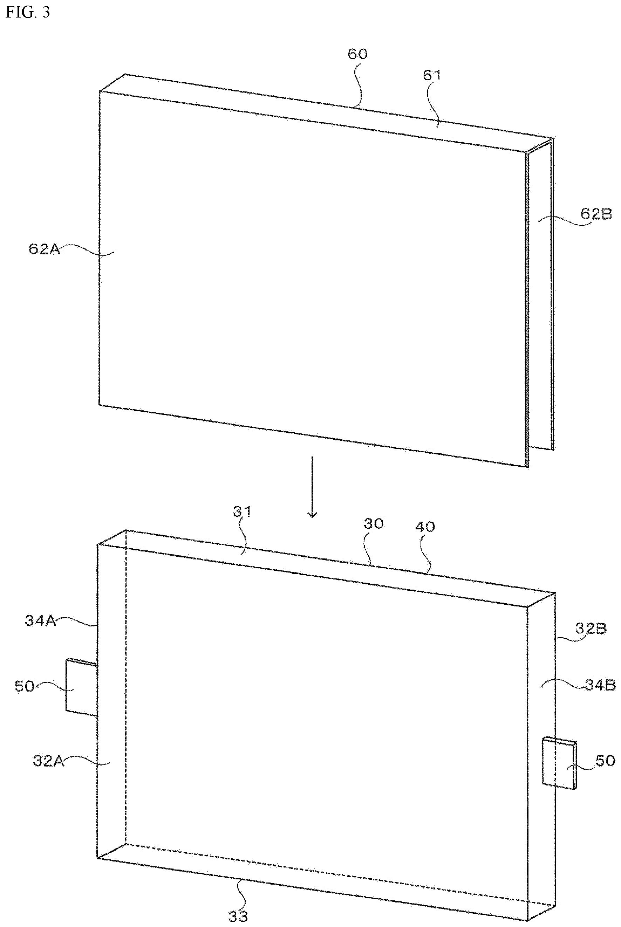

Fig. 3 is an exploded perspective view of the electrical storage device 10. In Fig. 3, the electrode assembly 20 is not shown. The outer packaging 30 includes a first surface 31, a pair of second surfaces 32A and 32B, a third surface 33, and a pair of fourth surfaces 34A and 34B. The shapes of the first surface 31 to the fourth surfaces 34A and 34B are determined depending on the shape of the electrode assembly 20. In the present embodiment, the shapes of the first surface 31 to the fourth surfaces 34A and 34B are rectangular.

The first surface 31 is a surface located on the upper side with the electrical storage device 10 placed on the cooling mechanism 100. A pair of second surfaces 32A and 32B face each other with the electrode assembly 20 interposed therebetween. Each of a pair of second surfaces 32A and 32B is larger in area than the first surface 31. The third surface 33 is a surface located on the lower side with the electrical storage device 10 placed on the cooling mechanism 100, in other words, a surface which is cooled by the cooling mechanism 100. Hereinafter, the third surface 33 is sometimes referred to as a cooling surface 33. In the present embodiment, the area of the cooling surface 33 is equal to the area of the first surface 31. A pair of fourth surfaces 34A and 34B are surfaces through which the electrode terminal 50 extends. A pair of fourth surfaces 34A and 34B face each other with the electrode assembly 20 interposed therebetween. In the present embodiment, a pair of fourth surfaces 34A and 34B are smaller in area than the first surface 31 and the cooling surface 33.

### <4. Configuration of heat transfer material>

Fig. 4 is a sectional view showing an example of a layer configuration of the heat transfer material 60. The heat transfer material 60 is attached to a surface of the outer packaging 30, in other words, at least a part of the surface of the base material layer 41 of the exterior film 40. The heat transfer material 60 is attached to the exterior film 40, for example, after the electrode assembly 20 is sealed through cold molding or after the electrode assembly 20 is sealed by winding the exterior film 40 around the electrode assembly 20. In another example, a packaging 70 (see Fig. 6) in which the heat transfer material 60 is joined in advance to at least a part of the surface of the exterior film 40 is manufactured. In a preferred example, the packaging 70 in which the heat transfer material 60 is joined in advance to the surface of the exterior film 40 so as to expose at least a part of the surface of the exterior film 40 is manufactured. The packaging 70 may have a shape in which a housing portion (recess) for housing the electrode assembly 20 is formed through cold molding, or a sheet shape. When the packaging 70 has a shape in which a housing portion is provided, the electrode assembly 20 is housed in the housing portion of the packaging 70, and the packaging 70 is sealed. When the packaging 70 has a sheet shape, the electrode assembly 20 is wound around the packaging 70 to seal the electrode assembly 20. The heat transfer material 60 is, for example, a laminate (laminate film) having a base material layer 60A, a heat transfer layer 60B, and an innermost layer 60C in the stated order. The heat transfer material 60 may be at least a single layer including only the heat transfer layer 60B. That is, in the heat transfer material 60, at least one of the base material layer 60A and the innermost layer 60C may be omitted. The base material layer 60A is laminated, for example, when insulation quality is required. The innermost layer 60C is laminated to joining to the exterior film 40. The innermost layer 60C may be, for example, a pressure sensitive adhesive layer.

As the material constituting base material layer 60A, the same material as exemplified for the base material layer 41 of the exterior film 40 may be used. In the present embodiment, the material for forming the base material layer 60A is polyethylene terephthalate.

Preferably, the innermost layer 60C is formed of a material capable of being heat-sealed to the base material layer 41 of exterior film 40, in other words, the innermost layer 60C is a heat-sealable resin layer. When the innermost layer 60C is a heat-sealable resin layer, the same material as exemplified for the heat-sealable resin layer 43 of the exterior film 40 may be used as the material for forming the innermost layer 60C. In the present embodiment, the material for forming the innermost layer 60C is polypropylene. The material for forming the innermost layer 60C may be, for example, an olefin-based resin other than polypropylene, or polybutylene terephthalate. When the innermost layer 60C is not a heat-sealable resin layer, the material for forming the innermost layer 60C may be, for example, an adhesive such as a urethane resin or a pressure sensitive adhesive, or the innermost layer 60C may be formed of any material capable of being joined to the base material layer 41 of the exterior film 40 with a double-sided tape or the like interposed therebetween. An example of the adhesive is a urethane resin.

Similarly to the exterior barrier layer 42, the heat transfer layer 60B may be formed of a material containing a metal, and examples of the metal include aluminum alloys, copper, gold, silver, brass, iron, and stainless steel from the viewpoint of heat conductivity. In the present embodiment, it is preferable that the heat transfer layer 60B is formed of a material containing an aluminum alloy or copper from the viewpoint of heat conductivity and cost. The material for forming the heat transfer layer 60B and the preferred configuration are the same as in the case of the exterior barrier layer 42, and the thickness of the heat transfer layer 60B is preferably equal to or larger than the thickness of the exterior barrier layer 42 for suitably transferring heat generated from the electrode assembly 20 to the cooling mechanism 100. The thickness of the heat transfer layer 60B is preferably 15 µm or more, more preferably 30 µm or more. From the viewpoint of moldability and productivity of the heat transfer material 60, the thickness of the heat transfer layer 60B is preferably 100 µm or less, more preferably 90 µm or less, more preferably 85 µm or less, still more preferably 80 µm or less. The thickness of the heat transfer layer 60B is preferably in the range of, for example, 15 µm to 100 µm, 15 µm to 90 µm, 15 µm to 85 µm, 15 µm to 80 µm, 30 µm to 100 µm, 30 µm to 90 µm, 30 µm to 85 µm, or 30 µm to 80 µm. When the thickness of the heat transfer layer 60B is 15 µm or more, heat generated from the electrode assembly 20 can be suitably transferred to the cooling mechanism 100. When the thickness of the heat transfer layer 60B is 100 µm or less, the moldability and productivity of the heat transfer material 60 are improved. From the viewpoint of suitably transferring heat generated in the electrode assembly 20 to the cooling mechanism 100, the thickness of the heat transfer layer 60B is preferably as thick as possible. Therefore, when the sheet-shaped heat transfer material 60 is not molded, in other words, processing such as bending is not performed, the thickness of the heat transfer layer 60B is preferably 300 µm or less.

When the electrode assembly 20 generates heat, a part of the heat is transferred to the first surface 31 to the fourth surfaces 34A and 34B of the outer packaging 30. For suitably transferring the heat of the electrode assembly 20 to the cooling mechanism 100, it is preferable that the heat transfer material 60 is attached to at least a pair of second surfaces 32A and 32B of the outer packaging 30 which have a large area. On the other hand, when the electrical storage device 10 is at work, it is preferable that heat transferred to the cooling surface 33 is rapidly transferred to the cooling mechanism 100 because the cooling surface 33 is in contact with the cooling mechanism 100 (see Fig. 1). Therefore, it is preferable that the heat transfer material 60 is not attached to the cooling surface 33. In the present embodiment, the heat transfer material 60 is attached to substantially the entirety of the first surface 31 and a pair of second surfaces 32A and 32B.

The shape of the heat transfer material 60 can be arbitrarily selected as long as it is a shape which allows the heat transfer material 60 to be attached to a surface of the outer packaging 30. In the present embodiment, the heat transfer material 60 is formed in a cover shape so that the heat transfer material 60 can be easily attached to the outer packaging 30. The heat transfer material 60 is not required to be molded in a cover shape, and may have just a sheet shape. The heat transfer material 60 includes a first portion 61 and a pair of second portions 62A and 62B, and has a shape similar to a U shape. The first portion 61 is attached to the first surface 31 of the outer packaging 30. The shape of the first portion 61 is the same as the shape of the first surface 31. A pair of second portions 62A and 62B are connected to the first portion 61. A pair of second portions 62A and 62B are attached to a pair of second surfaces 32A and 32B of the outer packaging 30. The second portion 62A is attached to the second surface 30A of the outer packaging 32. The shape of the second portion 62A is the same as the shape of the second surface 32A. The second portion 62B is attached to the second surface 30B of the outer packaging 32. The shape of the second portion 62B is the same as the shape of the second surface 32B.

### <5. Configuration of cooling mechanism>

Fig. 5 is a sectional view showing an example of the cooling mechanism 100. As a specific configuration of the cooling mechanism 100, a known cooling mechanism such as a water-cooling type cooling mechanism or an air-cooling type cooling mechanism can be arbitrarily selected as long as it has a configuration which enables cooling the electrical storage device 10. In the present embodiment, the cooling mechanism 100 is a water-cooling type cooling mechanism including a support layer 110, a first metal layer 120 and a second metal layer 130. The support layer 110 is a layer on which the electrical storage device 10 is placed. The material for forming the support layer 110 is, for example, a gel with high heat conductivity. The first metal layer 120 is joined to the support layer 110. The material for forming the first metal layer 120 is, for example, aluminum. The second metal layer 130 is joined to the first metal layer 120 such that a water flow path 140 is formed between the second metal layer and the first metal layer 120. The material for forming the second metal layer 130 is, for example, aluminum. The temperature of the water flowing through the flow path 140 can be arbitrarily selected as long as the electrical storage device 10 can be cooled, and the temperature is preferably 60°C or lower, more preferably 30 °C or lower.

### <6. Action and effect of electrical storage device>

In the electrical storage device according to the present embodiment, the exterior film 40 including the exterior barrier layer 42 and the heat transfer material 60 including the heat transfer layer 60B are formed as separate members, so that an increase in thickness of each of the exterior film 40 and the heat transfer material 60 is suppressed. Therefore, the exterior film 40 and the heat transfer material 60 can be favorably manufactured. If the electrode assembly 20 generates heat, the heat is transferred to the cooling mechanism 100 through a first heat transfer route, a second heat transfer route, a third heat transfer route and a fourth heat transfer route.

The first heat transfer route is a route in which on the third surface 33 of the outer packaging 30, heat is transferred in order along the lamination direction of the exterior film 40, that is, heat is transferred to the heat-sealable resin layer 43, the exterior barrier layer 42 and the base material layer 41 of the exterior film 40 and the cooling mechanism 100 in the stated order. Therefore, when the first heat transfer route is taken into consideration, the thickness of exterior film 40 is preferably thin.

The second heat transfer route is a route in which heat is transferred to the heat-sealable resin layer 43 and the exterior barrier layer 42 of the exterior film 40, and then transferred from the exterior barrier layer 42 to the cooling mechanism 100 and from the base material layer 41 to the cooling mechanism 100. If the heat conduction rate is low in the second heat transfer route, a part of the heat is transferred to the heat transfer material 60, and shifts to the fourth heat transfer route. Since the heat transfer material 60 has a function of assisting heat transfer through the second heat transfer route, heat conduction in a plane direction that is a direction perpendicular to the lamination direction is important. Therefore, the thickness of the heat transfer layer 60B of the heat transfer material 60 is preferably as thick as possible.

The third heat transfer route is a route in which heat is transferred to the heat-sealable resin layer 43, the exterior barrier layer 42 and the base material layer 41 of the exterior film 40, the innermost layer 60C and the heat transfer layer 60B of the heat transfer material 60 and the cooling mechanism 100 in the stated order.

The fourth heat transfer route is a route in which heat is transferred to the heat-sealable resin layer 43, the exterior barrier layer 42 and the base material layer 41 of the exterior film 40, the innermost layer 60C, the heat transfer layer 60B and the innermost layer 60C of the heat transfer material 60, the base material layer 41, the exterior barrier layer 42, the base material layer 41 and the cooling mechanism 100 in the stated order.

Since the electrical storage device 10 includes the heat transfer material 60, so that the heat transfer through the third heat transfer route and the fourth heat transfer route proceeds in addition to the first heat transfer route and the second heat transfer route, an excessive rise in temperature of the electrical storage device 10 can be suitably suppressed. The electrical storage device 10 further exhibits the following effects.

<6-1>
Since the thickness of the heat transfer layer 60B is equal to or larger than the thickness of the exterior barrier layer 42, heat is suitably transferred to the cooling mechanism 100 through the heat transfer material 60 in the third heat transfer route and the fourth heat transfer route.

<6-2>
The heat transfer material 60 is attached to at least the second surfaces 32A and 32B of the outer packaging 30 which have a relatively large area. Therefore, heat generated from the electrode assembly 20 can be more suitably transferred to the cooling mechanism 100.

<6-3>
Since the heat transfer material 60 is formed in a cover shape, the heat transfer material 60 can be easily attached to the outer packaging 30.

<6-4>
Since the heat transfer material 60 is not attached to the cooling surface 33, heat transferred to the cooling surface 33 can be rapidly transferred to the cooling mechanism 100.

<6-5>
Since the thickness of the exterior barrier layer 42 is 100 µm or less, the moldability and productivity of the heat transfer material 60 are improved.

### <7. Examples>

The inventors of the present application conducted a test in which a relationship between a temperature when a heat transfer material was not attached and a temperature when a heat transfer material was attached was confirmed by simulation for the electrical storage device of each of Examples. In the following description, among the elements forming the electrical storage devices of Examples, elements that are identical to those in the embodiment are given the same symbols as in the embodiment.

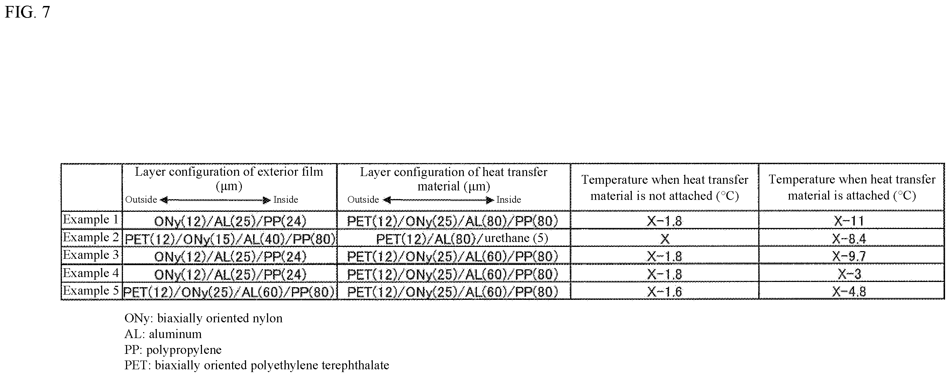

Fig. 7 is a table showing specifications of electrical storage devices 10 of Examples, and test results. The parenthesized numerical value next to the abbreviation of a material such as PET in Fig. 7 indicates the thickness of the relevant layer. The layers forming the exterior film 40 and the heat transfer material 60 of the electrical storage device 10 in each of Examples are joined with, for example, an adhesive. In Examples 1 to 3, the heat transfer material 60 was attached to the entirety of the first surface 31 and a pair of second surfaces 32A and 32B of the outer packaging 30 in the case where the heat transfer material 60 was attached to the outer packaging 30. That is, in Examples 1 to 3, the heat transfer material 60 is not attached to the cooling surface 33 and a pair of fourth surfaces 34A and 34B even in the case where the heat transfer material 60 is attached. In Examples 4 and 5, the heat transfer material 60 was attached to the entirety of the first surface 31 to the fourth surfaces 34A and 34B of the outer packaging 30 in the case where the heat transfer material 60 was attached to the outer packaging 30. That is, in Examples 4 and 5, the entire surface of the outer packaging 30 is covered with the heat transfer material 60 when the heat transfer material 60 is attached.

In Examples 1 to 5, it was confirmed that a rise in temperature of the electrical storage device 10 was suppressed in the case where the heat transfer material 60 is attached to the outer packaging 30 as compared to the case where the heat transfer material 60 is not attached as shown in Fig. 7. In Examples 3 and 4, the thickness of the exterior barrier layer 42 of the exterior film 40 and the thickness of the heat transfer layer 60B of the heat transfer material 60 are equal to each other. In Example 5, the thickness of the exterior barrier layer 42 of the exterior film 40 is equal to that in each of Examples 3 and 4, and the thickness of the heat transfer layer 60B of the heat transfer material 60 is larger than that in each of Examples 3 and 4. However, it was confirmed that a rise in temperature of the electrical storage device 10 was more suitably suppressed in Example 3 than in Examples 4 and 5. This may be because in Example 3, the heat transfer material 60 was not attached to the cooling surface 33, and thus heat transferred to the cooling surface 33 was rapidly transferred to the cooling mechanism 100.

### <8. Modification>

The embodiment is an example of possible forms of the electrical storage device, the heat transfer material and the packaging according to the present invention, and is not intended to limit the forms thereof. The electrical storage device, the heat transfer material and the packaging according to the present invention may have a form different from that exemplified in the embodiment. An example thereof is a form in which a part of the configuration of the embodiment is replaced, changed or omitted, or a form in which a new configuration is added to the embodiment. Some examples of modifications of the embodiment will be described below.

<8-1>
A location on the outer packaging 30 at which the heat transfer material 60 is attached can be arbitrarily selected. For example, the heat transfer material 60 may be attached to at least one of a pair of fourth surfaces 30A and 34B of the outer packaging 34.

<8-2>
In the embodiment, the first portion 61 and each of the second portions 62A and 62B of the heat transfer material 60 are connected to each other, but the first portion 61 and at least one of a pair of second portions 62A and 62B may be separated from each other.

<8-3>
In the embodiment, the heat transfer material 60 and the outer packaging 30 are joined, but when the heat transfer material 60 is formed in a cover shape, the heat transfer material 60 and the outer packaging 30 are not required to be joined. When the heat transfer material 60 has a sheet shape, in other words, the heat transfer material 60 is not molded, the heat transfer material 60 may be placed on the first surface 31 of the outer packaging 30, for example. In short, the heat transfer material 60 is only required cover at least a part of a surface of the outer packaging 30.

<8-4>
In the embodiment, the metal in the material forming the exterior barrier layer 42 and the metal in the material forming the heat transfer layer 60B are aluminum. However, the metal in the material forming the exterior barrier layer 42 and the metal in the material forming the heat transfer layer 60B may be different from each other.

<8-5>
In the embodiment, the heat transfer material 60 may include one or more layers having a buffer function outside the heat transfer layer 60B. The buffer layer may be laminated on the outer side of the base material layer 60A, and the base material layer 60A may also have a function of the buffer layer. When the heat transfer material 60 include a plurality of buffer layers, the buffer layers may be adjacent to each other, or may be laminated with the base material layer 60A, the heat transfer layer 60B or the like interposed therebetween.

The material for forming the buffer layer can be arbitrarily selected from materials having a cushioning property. The material having a cushioning property is, for example, rubber, a nonwoven fabric, or a foamed sheet. The rubber is, for example, natural rubber, fluororubber, or silicone rubber. The rubber hardness is preferably about 20 to 90. The material forming the nonwoven fabric is preferably a material having excellent heat resistance. When the buffer layer is formed of a nonwoven fabric, the lower limit of the thickness of the buffer layer is preferably 100 µm, more preferably 200 µm, still more preferably 1000 µm. When the buffer layer is formed of a nonwoven fabric, the upper limit of the thickness of the buffer layer is preferably 5,000 µm, more preferably 3,000 µm. A preferable range of the thickness of the buffer layer is 100 µm to 5,000 µm, 100 µm to 3,000 µm, 200 µm to 3,000 µm, 1,000 µm to 5,000 µm, or 1,000 µm to 3,000 µm. In particular, the thickness of the buffer layer is most preferably in the range of 1,000 µm to 3,000 µm.

When the buffer layer is formed of rubber, the lower limit of the thickness of the buffer layer is preferably 0.5 mm. When the buffer layer is formed of rubber, the upper limit of the thickness of the buffer layer is preferably 10 mm, more preferably 5 mm, still more preferably 2 mm. When the buffer layer is formed of rubber, the thickness of the buffer layer is preferably in the range of 0.5 mm to 10 mm, 0.5 mm to 5 mm, or 0.5 mm to 2 mm.

When the heat transfer material 60 has a buffer layer, the buffer layer functions as a cushion, so that the heat transfer material 60 is inhibited from being damaged by an impact in case where the electrical storage device 10 falls, or handling during manufacturing of the electrical storage device 10. When application of pressure to a battery is required as in the case of an all-solid-state battery, the pressure can be uniformly applied to the battery.

<8-6>
In the embodiment, the cooling mechanism 100 is a water-cooling type cooling mechanism, but the configuration of the cooling mechanism 100 is not limited thereto. For example, the cooling mechanism 100 may be an air-cooling type cooling mechanism. In this modification, the cooling surface 33 is in contact with air.

### DESCRIPTION OF REFERENCE SIGNS

10: Electrical storage device
20: Electrode assembly
30: Outer packaging
31: First surface
32A: Second surface
32B: Second surface
33: Third surface (cooling surface)
40: Exterior film
42: Exterior barrier layer
60: Heat transfer material
60A: Base material layer
60B: Heat transfer layer
70: Packaging
100: Cooling mechanism

## Claims

1. An electrical storage device comprising:
an electrode assembly;
an outer packaging including an exterior film that seals the electrode assembly; and
a heat transfer material attached to at least a part of a surface of the outer packaging, wherein
the exterior film includes at least a base material layer, an exterior barrier layer, and a heat-sealable resin layer,
the exterior barrier layer is formed of a material containing a metal,
the heat transfer material includes a heat transfer layer formed of a material containing a metal, and
a thickness of the heat transfer layer is equal to or larger than a thickness of the exterior barrier layer.

2. The electrical storage device according to claim 1, wherein
the outer packaging includes a first surface, and a second surface having an area larger than that of the first surface, and
the heat transfer material is attached to at least the second surface.

3. The electrical storage devices according to claim 1 or 2, wherein the heat transfer material is formed in a cover shape.

4. An electrical storage device according to claim 1 or 2, wherein
the outer packaging includes a cooling surface cooled by a cooling mechanism, and
the heat transfer material is attached to at least a part of a portion of a surface of the outer packaging other than the cooling surface so as to expose the cooling surface.

5. The electrical storage device according to claim 1 or 2, wherein the thickness of the exterior barrier layer is 100 µm or less.

6. The electrical storage device according to claim 1 or 2, wherein the heat transfer material includes a base material layer laminated on the heat transfer layer.

7. An electrical storage device comprising:
an electrode assembly;
an outer packaging including an exterior film that seals the electrode assembly; and
a heat transfer material attached to the outer packaging so as to expose at least a part of a surface of the outer packaging, wherein
the exterior film includes at least a base material layer, an exterior barrier layer, and a heat-sealable resin layer,
the exterior barrier layer is formed of a material containing a metal, and
the heat transfer material includes a heat transfer layer formed of a material containing a metal.

8. A heat transfer material attached to a surface of an outer packaging of an electrical storage device including an electrode assembly, and the outer packaging including an exterior film that seals the electrode assembly, wherein the heat transfer material includes a heat transfer layer formed of a material containing a metal.

9. The heat transfer material according to claim 8, wherein
the exterior film includes an exterior barrier layer formed of a material containing a metal, and
a thickness of the heat transfer layer is equal to or larger than a thickness of the exterior barrier layer.

10. The heat transfer material according to claim 8 or 9, wherein
the outer packaging includes a first surface, and a second surface having an area larger than that of the first surface, and
the heat transfer material is attached to at least the second surface.

11. The heat transfer material according to claim 8 or 9, which is formed in a cover shape.

12. The heat transfer material according to claim 8 or 9, wherein
the outer packaging includes a cooling surface cooled by a cooling mechanism, and
the heat transfer material is attached to at least a part of a portion of a surface of the outer packaging other than the cooling surface so as to expose the cooling surface.

13. The heat transfer material according to any one of claims 10 to 12 citing claim 9, wherein the thickness of the exterior barrier layer is 100 µm or less.

14. The heat transfer material according to claim 8 or 9, wherein the heat transfer material includes a base material layer laminated on the heat transfer layer.

15. A packaging comprising:
an exterior film for sealing an electrode assembly; and
a heat transfer material attached to at least a part of a surface of the exterior film, wherein
the exterior film includes at least a base material layer, an exterior barrier layer, and a heat-sealable resin layer,
the exterior barrier layer is formed of a material containing a metal,
the heat transfer material includes a heat transfer layer formed of a material containing a metal, and
a thickness of the heat transfer layer is equal to or larger than a thickness of the exterior barrier layer.

16. A packaging comprising:
an exterior film for sealing the electrode assembly; and
a heat transfer material attached to the exterior film so as to expose at least a part of a surface of the exterior film, wherein
the exterior film includes at least a base material layer, an exterior barrier layer, and a heat-sealable resin layer,
the exterior barrier layer is formed of a material containing a metal, and
the heat transfer material includes a heat transfer layer formed of a material containing a metal.
